# EUROPÄISCHE PATENTSCHRIFT

(11) **EP 2 174 328 B1**
(45) Veröffentlichungstag und Bekanntmachung des Hinweises auf die Patenterteilung: **22.11.2017**
(21) Anmeldenummer: 08774706.9
(22) Anmeldetag: 03.07.2008
(51) Int. Cl.: H01G 4/30, H01G 4/40

(54) **elektrisches Vielschichtbauelement mit einem Widerstand und einer Entkopplungsschicht**
Multilayer electrical component with a resistor and a decoupling layer
Composant multicouche électrique avec une résistance et une couche de découplage

(30) Priorität: 06.07.2007 DE 102007031510
(43) Veröffentlichungstag der Anmeldung: 14.04.2010
(73) Patentinhaber: Epcos AG, 81669 München (DE)
(72) Erfinder: FEICHTINGER, Thomas, 8010 Graz (AT); PECINA, Axel, 8543 St. Martin (AT)
(74) Vertreter: Epping - Hermann - Fischer
(86) Internationale Anmeldenummer: PCT/EP2008/058594
(87) Internationale Veröffentlichungsnummer: WO 2009/007303

(56) Entgegenhaltungen:
- DE-A1- 10 224 565
- DE-A1- 10 356 498
- JP-A- 2002 118 033

## Beschreibung

Es wird ein elektrisches Vielschichtbauelement, aufweisend insbesondere einen Vielschichtkondensator oder einen Vielschichtvaristor, beschrieben.

Aus DE 10224565 A1 ist ein Vielschichtbauelement bekannt, bei dem in einem Grundkörper gegenüberliegend angeordnete Vielschichtkondensatoren mit einer gemeinsamen, auf eine Stirnseite des Grundkörpers herausgeführten Masseelektrode verschaltet sind.

Aus DE 10356498 A1 ist ein Vielschichtbauelement bekannt, wobei eine Verschaltungsstruktur zwei Elektrodenstapeln miteinander verbindet, und wobei zwei Symmetrieebenen, von denen eine parallel zu einer keramischen Schicht und eine andere senkrecht zu einer keramischen Schicht verläuft, im Bauelement vorhanden sind.

Eine zu lösende Aufgabe besteht darin, ein elektrisches Bauelement anzugeben, welches bei minimaler Wechselwirkung von vom Bauelement aufgewiesenen Schaltelementen eine möglichst hohe Integrationsdichte aufweist.

Die Erfindung ist durch die Merkmalskombination des Anspruchs 1 definiert.

Es wird ein elektrisches Vielschichtbauelement mit zumindest einem Grundkörper angegeben, der einen Stapel von übereinander angeordneten dielektrischen Schichten und Elektrodenschichten umfasst. Außerdem weist das Vielschichtbauelement einen Widerstand bzw. eine Widerstandstruktur sowie eine Entkopplungsschicht auf, wobei die Entkopplungsschicht den Widerstand von zumindest einem Teil des Vielschichtbauelements, insbesondere des Grundkörpers, chemisch isoliert. Gemäß einer Ausführungsform ist die Entkopplungsschicht auf einer Außenfläche des Grundkörpers aufgebracht.

Vorteilhafterweise wird dadurch erreicht, dass das Material des mittels der Entkopplungsschicht isolierten einen Teils des Vielschichtbauelements chemisch nicht mit dem Trägermaterial des Widerstands bzw. direkt mit dem Widerstand reagiert. Somit können die erwünschten Eigenschaften des Widerstands mit geringem Aufwand eingestellt werden. Dies könnte beispielsweise durch Aufdrucken einer bestimmten Widerstandsstruktur auf die Entkopplungsschicht, welche auch als Trägerschicht betrachtet werden kann, erfolgen, wobei die Materialbeschaffenheit sowie der Pfad bzw. die Bahn der Struktur während der Herstellung bzw. während der Temperaturbehandlung des Vielschichtbauelements sowie während seiner Inbetriebnahme unverändert bleibt. Erfindungsgemäß ist es vorgesehen, dass eine Entkopplungsschicht an der Oberseite und eine an der Unterseite des Grundkörpers angeordnet ist. An der Unterseite des Vielschichtbauelements hat eine Entkopplungsschicht den Vorteil, dass sie ein im Grundkörper enthaltenes Material von jenem eines Substrats, auf das das Vielschichtbauelement montiert sein könnte, chemisch entkoppelt.

Gemäß einer Ausführungsform des Vielschichtbauelements enthält die zumindest eine Entkopplungsschicht ein Zirkon-Oxid-Glaskomposit. Die Verwendung dieses Materials als Bestandteil der Entkopplungsschicht hat den Vorteil, dass es das Schaffen einer Entkopplungsschicht ermöglicht, die eine verhältnismäßig glatte Oberfläche aufweist, welche mit besonders detaillierten und genauen Widerstandsstrukturen bedruckt werden kann. Es hat sich außerdem herausgestellt, dass der Einsatz von Metalloxiden und / oder von Nitriden mit oder ohne dem Zirkon-Oxid-Glaskomposit im Sinne möglichst vollständiger chemischer Entkopplungseigenschaften der Entkopplungsschicht besonders günstig ist.

Gemäß einer vorteilhaften Ausführungsform weist die zumindest eine Entkopplungsschicht eine streukapazitätreduzierende Funktion auf. Dabei kann die Entkopplungsschicht ein Material enthalten, welches die Ausbreitung bzw. die Überleitung von Streukapazitäten zwischen dem einen genannten Teil des Vielschichtbauelements und dem Widerstand zumindest reduziert. Zu diesem Zweck wurde experimentell festgestellt, dass neben dem Zirkon-Oxid-Glaskomposit (ZrOₓ-Glaskomposit; x ≥ 1) auch andere Materialien geeignet sind, wie zum Beispiel ein Magnesium-Oxid-Glaskomposit (MgOₓ-Glaskomposit; x ≥ 1), ein Aluminium-Oxid-Glaskomposit (AlOₓ-Glaskomposit; x ≥ 1) oder eine Mischung aus den genannten Glaskompositen mit einem Zirkon-Oxid-Glaskomposit. Darüber hinaus können in der Entkopplungsschicht Materialien wie zum Beispiel Zn₂Mn0₄ sowie andere Vertreter der Familie A₂B0₄ enthalten sein, wobei A und B jeweils insbesondere zweiwertige Metallkationen umfassen.

Es wird bevorzugt, dass die zumindest eine Entkopplungsschicht ein chemisches Entkopplungsmaterial enthält bzw. größtenteils aus einem Entkopplungsmaterial besteht, welches eine Dielektrizitätskonstante von weniger als 15 aufweist. Hiermit wird ein besonders wirkungsvoller streukapazitätsreduzierender Effekt erzielt. Vorteilhafterweise wirkt aufgrund einer solchen niedrigen Dielektrizitätskonstante die Entkopplungsschicht besonders isolierend gegenüber parasitären Effekten, die beispielsweise im Hochfrequenzbereich auftreten könnten. Dabei hat das Vielschichtbauelement den Vorteil, dass elektromagnetische Wechselwirkungen zwischen dem Widerstand und einem Teil des Vielschichtbauelements, der verschiedene durch Schaltelemente hervorgerufene elektrische Eigenschaften aufweisen könnte, wie beispielsweise Kapazitäten, Widerstände oder auch halbleitende Schichten, vermieden oder zumindest reduziert werden können.

Der Widerstand kann gemäß einer Ausführungsform des Vielschichtbauelements zumindest teilweise auf zumindest eine Außenfläche der Entkopplungsschicht aufgebracht sein. Dabei kann der Widerstand auf einer Oberfläche der Entkopplungsschicht aufgebracht werden. Bildet die Entkopplungsschicht die oberste Schicht des Vielschichtbauelements, so ist der Widerstand als auf die obere Oberfläche des Vielschichtbauelements angeordnet zu betrachten.

Das Aufbringen eines Widerstands bzw. einer Widerstandstruktur auf zumindest einer stirnseitigen Außenfläche des Vielschichtbauelements hat den Vorteil, dass keine weiteren Schichten des Vielschichtbauelements in Stapelrichtung oberhalb oder unterhalb des Widerstands zu einer Veränderung seiner elektrischen Eigenschaften führen.

Gemäß einer bevorzugten Ausführungsform des Vielschichtbauelements ist der Widerstand zumindest teilweise auf elektrischen Leiterbahnen angeordnet, welche nach Außen elektrisch kontaktierbar sind. Dabei können die elektrischen Leiterbahnen zumindest teilweise auf eine Außenfläche des Grundkörpers bzw. des Vielschichtbauelements angeordnet sein. Diese elektrischen Leiterbahnen werden nachfolgend auch als Widerstandspads bezeichnet. Die elektrischen Leiterbahnen sind vorzugsweise mit Außenkontakten des Vielschichtbauelements, welche als Schichten ausgeführt sein könnten, elektrisch kontaktiert.

Es wird bevorzugt, dass der Widerstand zumindest teilweise mit einer ersten Passivierungsschicht abgedeckt ist. Ist der Widerstand auf der oberen Außenfläche des Vielschichtbauelements angeordnet, so bildet die erste Passivierungsschicht die oberste Schicht des Vielschichtbauelements bezogen auf seine Stapelrichtung. Diese erste Passivierungsschicht enthält nach einer Ausführungsform Glas. Andere Materialien können jedoch auch eingesetzt werden, welche eine chemische Reaktion mit dem Material des Widerstands bzw. mit der Oberfläche des Grundkörpers erschweren.

Auch ist das Vielschichtbauelement gemäß einer Ausführungsform derart ausgestaltet, dass zumindest ein Teil der Außenfläche des Vielschichtbauelements mit einer zweiten Passivierungsschicht abgedeckt ist. Auch die zweite Passivierungsschicht könnte dabei Glas enthalten.

Erste und zweite Passivierungsschichten sind vorzugsweise auf unterschiedlichen Außenflächen des Grundkörpers angeordnet. Dabei könnte beispielsweise die erste Passivierungsschicht auf der Oberseite des Grundkörpers, insbesondere auf der Außenfläche des Widerstands angeordnet sein, wobei die zweite Passivierungsschicht im Gegensatz dazu auf den Seitenflächen sowie auf der Unterseite des Grundkörpers aufgebracht sein könnte. Insbesondere wird dabei bevorzugt, dass eine vorzugsweise Glas enthaltende Passivierungsschicht zwischen dem Grundkörper und seitlich am Grundkörper aufgebrachten Außenelektroden angeordnet ist.

Gemäß einer Ausführungsform des Vielschichtbauelements umfasst der Grundkörper mehrere lateral nebeneinander angeordnete Stapel von übereinander angeordneten Elektrodenschichten. Dabei können Elektrodenschichten auf gemeinsame dielektrische Schichten liegen. Somit wird ein Vielschichtbauelement angegeben, welches ein Array von Elektrodenstapel umfasst.

Vorzugsweise ist der Grundkörper auf seinen unterschiedlichen Seitenflächen mit mehreren Außenkontakten versehen, die jeweils mit gleich gepolten Elektrodenschichten kontaktiert sind.

Gemäß einer Ausführungsform umfasst der Teil des Grundkörpers, von dem der Widerstand mittels der Entkopplungsschicht chemisch isoliert ist, einen Varistorkörper und / oder einen Kondensatorkörper.

Es ist gemäß einer Ausführungsform des Vielschichtbauelements vorgesehen, dass eine elektromagnetische Abschirmstruktur im Grundkörper integriert ist, die den Widerstand von zumindest einem Teil des Grundkörpers elektromagnetisch entkoppelt. Bei dieser Abschirmstruktur könnte es sich um eine nach außen unkontaktierte, elektrisch leitende Schicht handeln. So wird die Abschirmstruktur auch als "schwebende" Elektrode bezeichnet.

Gemäß einer Ausführungsform ist die elektromagnetische Abschirmstruktur in der zumindest einen Entkopplungsschicht selbst integriert. Stattdessen könnte Sie jedoch auch von chemischem Entkopplungsmaterial umgeben sein.

Gemäß einer Ausführungsform weist der Grundkörper eine Masseelektrode auf. Diese ist vorzugsweise an zwei Enden jeweils mit einem Außenkontakt des Vielschichtbauelements kontaktiert. Im Vielschichtbauelement könnten gemäß einer Ausführungsform mehrere Masseelektroden in Stapelrichtung übereinander angeordnet sein, die sich mit Elektrodenschichten und dielektrischen Schichten abwechseln.

Gemäß einer Ausführungsform ist es vorgesehen, dass durch benachbarte und in orthogonaler Projektion sich überlappende Elektrodenschichten und einer dazwischen liegenden dielektrischen Schicht eine Kapazität erzeugt ist. Die dielektrische Schicht könnte dabei eine Kondensatorkeramik enthalten, wobei bei mehreren übereinander angeordneten Kapazitäten ein Vielschichtkondensator gebildet wird.

Zwischen zumindest zwei übereinander angeordneten bzw. vorhandenen Kapazitäten kann eine zusätzliche Passivierungsschicht angeordnet sein. Vorteilhafterweise können dadurch mehrere Kapazitäten im Vielschichtbauelement elektromagnetisch voneinander entkoppelt werden. In diesem Sinne kann auch zwischen mehreren bzw. zwischen je zwei Vielschichtkondensatoren zumindest eine solche Passivierungsschicht angeordnet sein.

Gemäß einer Ausführungsform enthält eine bzw. enthalten mehrere dielektrische Schichten des Vielschichtbauelements eine Varistorkeramik. Mehrere übereinander angeordnete Kapazitäten können so einen Vielschichtvaristor bilden.

Vielschichtkondensatoren sowie Vielschichtvaristoren der beschriebenen Art können im Vielschichtbauelement übereinander angeordnet sein, wobei sie mittels einer Entkopplungsschicht und/oder einer elektromagnetischen Abschirmstruktur voneinander chemisch bzw. elektromagnetisch entkoppelt sein könnten.

Es wird bevorzugt, dass die Anordnung von dielektrischen Schichten und Elektrodenschichten des Vielschichtbauelements bezogen auf eine laterale Ebene, welche parallel zu den dielektrischen Schichten verläuft, symmetrisch ist. Zusätzlich oder alternativ könnte die Anordnung von dielektrischen Schichten und Elektrodenschichten bezogen auf eine Ebene, welche senkrecht zu den dielektrischen Schichten beziehungsweise in Stapelrichtung verläuft, symmetrisch ausgeführt sein. In beiden Fällen wird bevorzugt, dass die Form der Elektrodenschichten, beispielsweise auch die Form von Masseelektroden, bezogen auf die genannten Ebenen ebenfalls symmetrisch ausgeführt sind. Die Form des Widerstands bzw. der Widerstandsstruktur könnte bezogen auf die senkrecht zu den dielektrischen Schichten verlaufene Ebene eine Symmetrie aufweisen. Weist das Vielschichtbauelement mehrere Widerstandsstrukturen auf mehreren Ebenen bezogen auf die Stapelrichtung auf, so könnten diese Widerstandsstrukturen auch bezogen auf die parallel zu den dielektrischen Schichten verlaufende Symmetrieebene eine Symmetrie aufweisen.

Die beschriebenen Gegenstände werden anhand der folgenden Figuren und Ausführungsbeispiele näher erläutert. Dabei zeigt beziehungsweise zeigen:
- Figur 1: eine seitliche Querschnittsansicht eines elektrischen Vielschichtbauelements mit einer oberseitig angeordneten, auf einer Entkopplungsschicht aufgebrachten Widerstandsstruktur sowie einer die Widerstandstruktur abdeckenden Passivierungsschicht,
- Figur 2: eine andere seitliche Querschnittsansicht des Vielschichtbauelements gemäß Figur 1,
- Figuren 3A bis 3J: unterschiedliche Schritte beziehungsweise Zeitpunkte während der Herstellung eines Vielschichtbauelements der beschriebenen Art,
- Figur 4A: eine seitliche Querschnittsansicht eines elektrischen Vielschichtbauelements gemäß Figur 1, jedoch zusätzlich aufweisend elektromagnetische Abschirmstrukturen sowie mehrere Entkopplungsschichten,
- Figur 4B: eine andere seitliche Querschnittsansicht des elektrischen Vielschichtbauelements gemäß Figur 4A,
- Figur 5A: eine seitliche Querschnittsansicht eines elektrischen Vielschichtbauelements umfassend zwei übereinander angeordnete Stapel von Elektrodenschichten sowie dielektrische Schichten, welche mittels einer Passivierungsschicht voneinander entkoppelt sind,
- Figur 5B: eine seitliche Querschnittsansicht des elektrischen Vielschichtbauelements gemäß Figur 5A,
- Figur 6A: eine Draufsicht auf ein elektrisches Vielschichtbauelement der beschriebenen Art mit einer Vielzahl von elektrischen Außenkontakten,
- Figur 6B: einen seitliche Querschnittsansicht des mit der Figur 6A gezeigten Vielschichtbauelements.

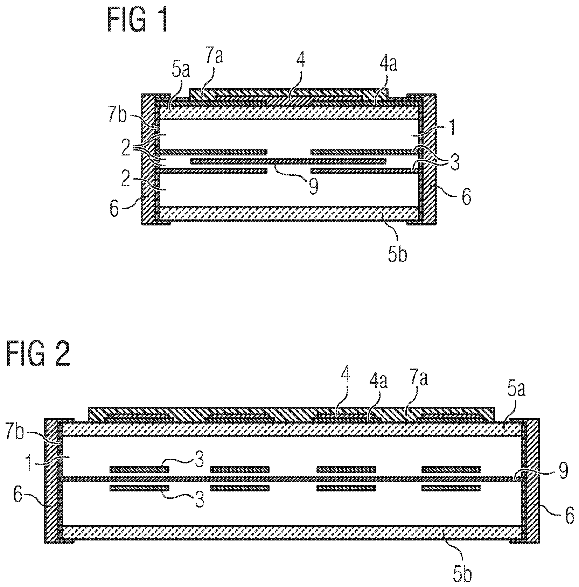

Figur 1 zeigt eine seitliche Querschnittsansicht eines elektrischen Vielschichtbauelements mit einem Grundkörper 1 der einen Stapel von übereinander angeordneten dielektrischen Schichten 2 und Elektrodenschichten 3 aufweist. Zwischen übereinander angeordneten Elektrodenschichten 3 ist eine gemeinsame Masseelektrode 9 angeordnet. Die Oberseite des Grundkörpers ist mit einer chemischen Entkopplungsschicht 5a versehen, wobei die Unterseite des Grundkörpers mit einer anderen Entkopplungsschicht 5b versehen ist. Diese könnte chemisch entkoppelnd wirken. Es wird jedoch bevorzugt, dass diese unterseitige Entkopplungsschicht 5b elektromagnetisch entkoppelnd wirkt, damit möglichst geringe elektromagnetische Felder von einer Leiterplatine, auf die das Vielschichtbauelement angeordnet sein könnte, in das Vielschichtbauelement eindringen.

Es sind Außenkontakte 6 vorhanden, welche an sich gegenüberliegenden Seitenflächen des Grundkörpers 1 angeordnet sind, wobei die Außenkontakte vorzugsweise als metallisierte Schichten bzw. in Stapelrichtung des Vielschichtbauelements langgestreckte Streifen ausgeführt sind. Zwischen einem Außenkontakt 6 und der Seitenfläche des Grundkörpers ist eine Passivierungsschicht 7b vorhanden.

Die Elektrodenschichten 2 sind jeweils mit ihrem einen Ende bis zu einem Außenkontakt 6 herangeführt um einen elektrischen Kontakt mit ihm herzustellen. Die Außenkontakte 6 sind vorzugsweise kappenförmig ausgebildet, wobei sie jeweils eine das Vielschichtbauelement seitlich umklammernde Form aufweisen.

Oberseitig weist das Vielschichtbauelement elektrische Leiterbahnen bzw. Widerstandspads 4a auf, welche auf der Oberseite der oberen Entkopplungsschicht 5a aufgebracht sind und ihre Oberfläche teilweise abdecken. In einem Bereich der Oberfläche der Entkopplungsschicht ist neben den Widerstandspads 4a außerdem eine Widerstandsstruktur 4 aufgebracht, wobei die Widerstandsstruktur 4 sowohl die Oberfläche der Entkopplungsschicht 5a als auch diejenigen der Widerstandspads 4a berührt. Eine Passivierungsschicht 7a deckt die Widerstandsstruktur oberseitig vorzugsweise vollständig ab. Dabei könnte die Passivierungsschicht 7a zumindest auch einen Teil der Oberflächen der Widerstandspads 4a abdecken.

Die Entkopplungsschicht 5a reduziert das Übersprechen zwischen dem Widerstand 4 und den im Grundkörper enthaltenen Elektrodenschichten 3 sowie Masseelektrode 9.

Der Grundkörper 1 enthält eine Funktionskeramik, wie zum Beispiel eine Varistor oder eine Kondensatorkeramik, in dem Elektrodenstapel angeordnet sind, die mit den Außenkontakten 6 verbunden sind sowie mindestens eine Kapazität und mindestens einen Varistor beziehungsweise einen Kondensator bilden.

Vorzugsweise enthält beziehungsweise enthalten die Entkopplungsschichten 5a und 5b ein Komposit enthaltend Zirkon-Oxid und Glas, wobei die Entkopplungsschichten 5a und 5b gemeinsam mit dem Grundkörper 1 beziehungsweise mit der Funktionskeramik sinterbar sind.

Figur 2 zeigt eine seitliche Querschnittsansicht des mit der Figur 1 bereits gezeigten Vielschichtbauelements, wobei der Querschnitt dieser Figur senkrecht zu jenen der Figur 1 verläuft. Mit dieser Ansicht werden mehrere Stapel von Elektrodenschichten 3 gezeigt, welche in lateraler Richtung nebeneinander angeordnet sind. Eine Masseelektrode 9 verbindet zwei sich gegenüberliegende, jeweils an einer Seitenfläche des Vielschichtbauelements bzw. Grundkörpers 1 angebrachte Außenkontakten 6, wobei die Masseelektrode zwischen je zwei Elektrodenschichten 3 der mehreren nebeneinander angeordneten Elektrodenstapel angeordnet ist. Oberseitig auf der Oberfläche der Entkopplungsschicht 5a sind mehrere Widerstandspads 4a sowie zumindest teilweise auf den Widerstandspads angeordnete Widerstände 4 gezeigt, wobei jeder Widerstand zwei sich gegenüberliegende Widerstandspads miteinander verbindet und die Widerstandspads jeweils an einem Ende mit einem an einer Seitenfläche des Grundkörpers 1 angebrachten Außenkontakt 6 kontaktiert sind. Eine vorzugsweise Glas enthaltende Passivierungsschicht deckt die Widerstände 4 sowie die Widerstandspads 4a oberseitig vollständig ab.

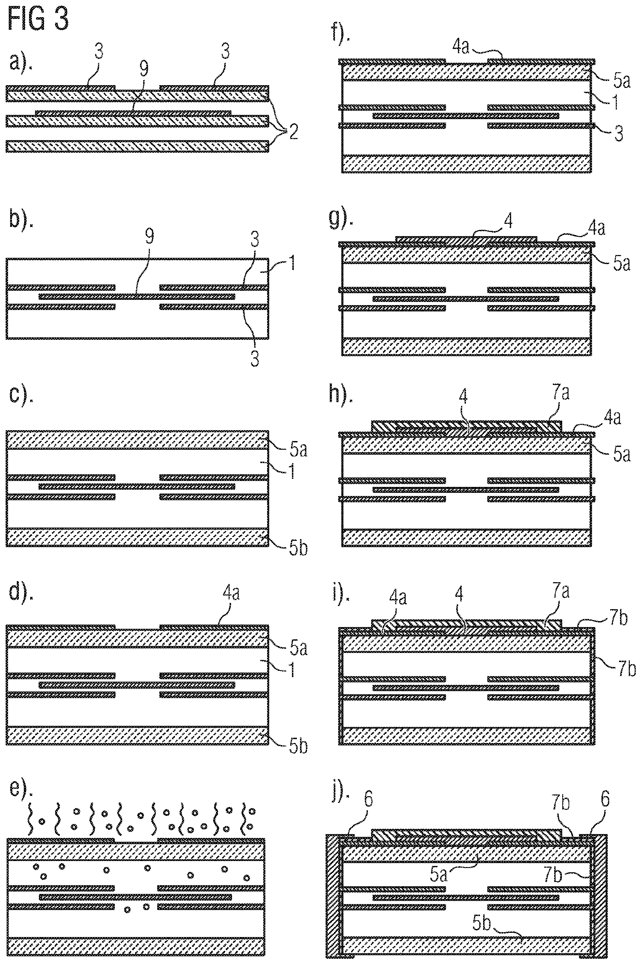

Figur 3A zeigt mehrere dielektrische Schichten 2, welche übereinander gestapelt werden, wobei eine dielektrische Schicht mit einer Masseelektrodenstruktur beziehungsweise mit einer Masseelektrode 9 und eine weitere dielektrische Schicht 2 mit zwei Elektrodenschichten 3, welche voneinander im mittleren Bereich der dielektrischen Schicht mit einem Abstand getrennt sind, bedruckt sind. Die Elektrodenschichten 3 überstehen die dielektrische Schicht, auf der sie liegen, mit ihrem mit den Außenkontakten 6 zu kontaktierenden Enden derart, dass sie nach dem Laminieren der dielektrischen Schichten ein Stück aus dem dadurch entstandenen Grundkörper 1 herausragen.

Figur 3B zeigt den laminierten Zustand der in der Figur 3A gezeigten verschiedenen Schichten des Grundkörpers.

Figur 3C zeigt den Grundkörper 1 gemäß Figur 3B, der oberseitig mit einer Entkopplungsschicht 5a und unterseitig mit einer Entkopplungsschicht 5b versehen worden ist.

Figur 3D zeigt den mit den Entkopplungsschichten 5a, 5b ober- und unterseitig versehenen Grundkörper 1, wobei die obere Entkopplungsschicht 5a des Weiteren mit Widerstandspads 4a versehen ist und die sich mit einem Abstand voneinander gegenüber liegen und jeweils mit einem Ende mit einem Außenkontakt 6 kontaktierbar sind.

Figur 3E zeigt einen Körper eines Vielschichtbauelements gemäß Figur 3D, mit dem Unterschied, dass in dieser Figur der Entbinderungsprozess zur Entfernung von in den keramischen Schichten 2 enthaltenem organischem Binder schematisch dargestellt ist. Ein organischer Binder könnte in den keramischen Schichten 2 enthalten sein, um sie zur Laminierung in einen Grundkörper 1 handhabbarer zu gestalten.

Figur 3F zeigt den Körper gemäß der Figuren 3D und 3E, dessen Seitenflächen mittels eines geeigneten Werkzeuges derart abgefräst worden sind, dass die Enden der Elektrodenschichten 3 und diejenigen der Widerstandspads ein Stück aus dem Grundkörper 1 herausragen bzw. im Falle der Widerstandspads die obere Entkopplungsschicht 5a geringfügig überstehen.

Figur 3G zeigt den Vielschichtbauelementkörper gemäß Figur 3F, wobei ein Widerstand 4 die sich mit einem Abstand auf der Oberfläche der Entkopplungsschicht 5a gegenüberliegenden Widerstandspads 4a miteinander verbindet. Dabei steht der Widerstand 4 bzw. die Widerstandsstruktur 4 sowohl mit den Oberflächen der Widerstandspads 4a als auch mit einem Teil der Oberfläche der Entkopplungsschicht 5a in Berührung.

Figur 3H zeigt den Vielschichtbauelementkörper gemäß Figur 3G, wobei sowohl der Widerstand 4 als auch zumindest ein Teil der Oberfläche der Widerstandspads 4a mittels einer Passivierungsschicht 7a abgedeckt sind.

Figur 3I zeigt den Vielschichtbauelementkörper gemäß Figur 3H, wobei eine zusätzliche Passivierungsschicht 7b auf die Seitenflächen des Körpers sowie auf den Oberflächenbereich der Widerstandspads 4a, der nicht von der Passivierungsschicht 7a bzw. von dem Widerstand 4 abgedeckt ist, aufgebracht ist. Die zusätzliche Passivierungsschicht 7b wird derart auf den Vielschichtbauelementkörper seitlich aufgebracht, dass die zuvor überstehenden Widerstandspads und Elektrodenschichten 3 aufgrund der zusätzlichen seitlichen Beschichtung mit der Passivierungsschicht nicht weiter überstehen und eine ebene bzw. ebene Seitenflächen des Vielschichtbauelements erzeugt werden.

Figur 3J zeigt den Vielschichtbauelementkörper gemäß Figur 3I, mit dem zusätzlichen Merkmal, wonach Außenkontakte eine den Körper seitlich umklammernde Form aufweisen. Dabei bleibt die zuvor aufgetragene Passivierungsschicht 7b vorzugsweise zwischen den Außenkontakten und der äußeren Oberfläche des Grundkörpers bzw. der Entkopplungsschichten 5a und 5b bestehen.

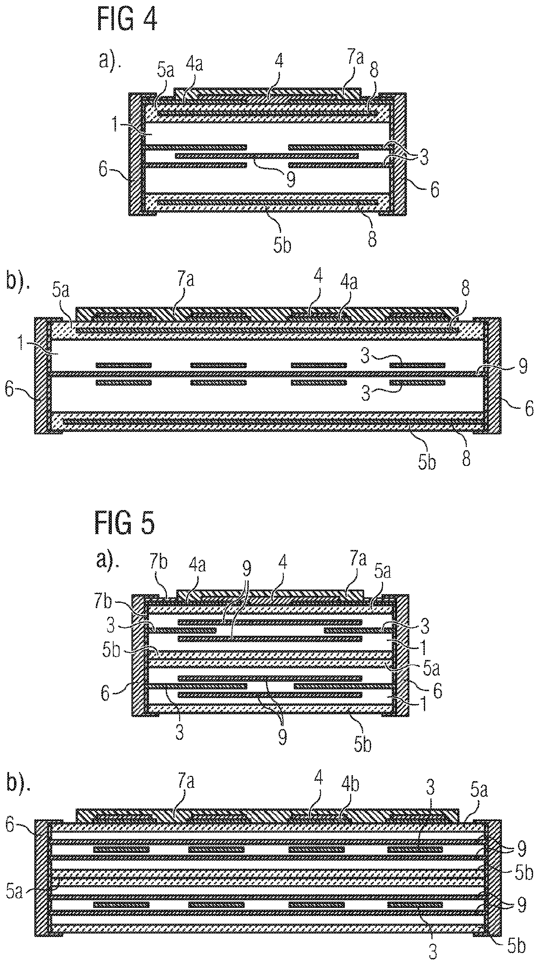

Figur 4A zeigt eine seitliche Querschnittsansicht eines elektrischen Vielschichtbauelements, dessen Grundkörper 1 ober- und unterseitig mit jeweils einer Entkopplungsschicht 5a, 5b versehen ist. Innerhalb jeder Entkopplungsschicht ist eine Abschirmelektrode 8 angeordnet, welche als freiliegende Elektrode bzw. als nicht nach außen kontaktierte metallische Fläche betrachtet werden kann. Darüber hinaus ist das Vielschichtbauelement gemäß der Figuren 3A bis 3B und der dazugehörigen Beschreibung aufgebaut.

Figur 4B zeigt eine andere seitliche Querschnittsansicht des mit der Figur 4A gezeigten Vielschichtbauelements, wobei die Querschnittsebene senkrecht zu derjenigen der Figur 4A verläuft. Es werden entlang der Längsachse des Vielschichtbauelements verlaufende Abschirmstrukturen 8 gezeigt, welche jeweils in den Entkopplungsschichten 5a, 5b enthalten sind.

Die Abschirmstrukturen 8 können vorteilhafterweise in höherem Maße die an der Oberseite des Vielschichtbauelements angeordnete Widerstände von dem Grundkörper beziehungsweise von zumindest einem Teil des Grundkörpers, insbesondere elektromagnetisch, entkoppeln. Die unterseitig auf dem Grundkörper angeordnete Entkopplungsschicht 5b kann den Grundkörper beziehungsweise den einen Teil des Grundkörpers von gegebenenfalls auf einer Montagefläche bzw. Leiterplatine, auf die das Vielschichtbauelement aufliegen könnte, angeordneten Leiterbahnen elektromagnetisch entkoppeln.

Die Verwendung einer schwebenden Elektrode 8 in zumindest eine der Entkopplungsschichten 5a, 5b trägt beispielsweise bei Hochfrequenzanwendungen des Vielschichtbauelements zu einem besonders vorteilhaften Filterverhalten bei.

Figur 5A zeigt eine seitliche Querschnittsansicht eines elektrischen Vielschichtbauelements mit mehreren übereinander angeordneten Grundkörpern 1, welche jeweils ober- und unterseitig mit einer Entkopplungsschicht 5a beziehungsweise 5b versehen sind. Jeder Grundkörper weist mehrere Stapel von Elektrodenschichten 3 auf, wobei zwischen je zwei Elektrodenschichten eines Stapels eine Masseelektrode 9 angeordnet sein kann. Da sich die unterseitige Entkopplungsschicht 5a des oberen Grundkörpers 1 an die obere Entkopplungsschicht 5a des unteren Grundkörpers 1 angrenzt, wird eine Anordnung von in Stapelrichtung benachbarten Entkopplungsschichten 5a, 5b geschaffen, die eine besonders gründliche elektromagnetische Entkopplung der mit den Elektrodenstapeln ausgebildeten verschiedenen Grundkörpern 1 ermöglicht. Die Anordnung von übereinander angeordneten Grundkörpern mit jeweils ober- und unterseitigen Entkopplungsschichten könnte in Stapelrichtung auf der Basis desselben Musters vervielfältigt werden.

Beispielsweise könnte ein erster Grundkörper 1 mit jeweils mehreren Stapeln von Elektrodenschichten bzw. Masseelektroden 9 einen Varistorkörper umfassen, wobei ein in Stapelrichtung benachbarter, weiterer Grundkörper 1, ebenfalls aufweisend einen Stapel von Elektrodenschichten 3 bzw. Masseelektroden 9 einen weiteren Varistorkörper oder beispielsweise einen Kondensator bzw. Vielschichtkondensator umfassen könnte. Da die genannten Grundkörper voneinander mittels Entkopplungsschichten 5a, 5b voneinander chemisch und / oder elektromagnetisch entkoppelt werden, kann ein Vielschichtbauelement mit mehreren Funktionen bei hoher Integrationsdichte bezogen auf die im Vielschichtbauelement angeordneten Schaltelemente bzw. Funktionskeramiken, geschaffen werden.

An der Außenseite des Vielschichtbauelements werden Passivierungsschichten 7b, 7a, Außenkontakte 6 sowie Widerstandspads 4a und Widerstände 4 gemäß der vorherigen Figuren bzw. Beschreibungsteilen ausgebildet.

Figur 5B zeigt eine weitere seitliche Querschnittsansicht des mit der Figur 5A gezeigten Vielschichtbauelements, wobei die Ebene des Querschnitts senkrecht zu derjenigen des Vielschichtbauelements gemäß Figur 5A verläuft. Somit werden als Draufsicht die Enden mehrerer Elektrodenschichten 3 gezeigt, die in jedem Grundkörper 1 lateral nebeneinander angeordnet sind aber mit gemeinsamen Masseelektroden 9 zusammenwirken.

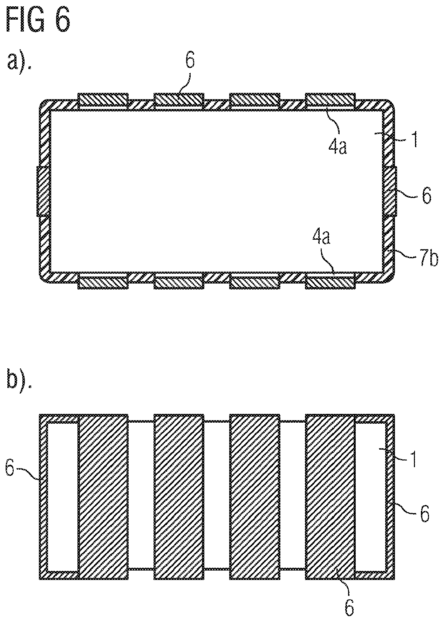

Figur 6A ist eine Draufsicht auf ein elektrisches Vielschichtbauelement gemäß einer der vorhergehenden Figuren sowie den jeweils zugehörigen Beschreibungsteilen, wobei zwei Außenkontakte 6 sich an unterschiedlichen, in Längsrichtung gegenüberliegenden Seitenflächen des Vielschichtbauelements befinden. Diese Außenkontakte 6 kontaktieren vorzugsweise beide ein und dieselbe Masseelektrode 9, wobei mehrere solche Masseelektroden 9 in Stapelrichtung übereinander angeordnet sein könnten.

Auf den anderen Seitenflächen des Vielschichtbauelements sind jeweils vier Außenkontakte 6 angeordnet, die sich in der senkrecht zur Längsrichtung verlaufenden Richtung gegenüberliegen. Zwischen den Außenkontakten entlang der Außenfläche des Grundkörpers 1 ist vorzugsweise eine Passivierungsschicht 7b aufgebracht, welche die Oberflächeneigenschaften des Grundkörpers vor äußeren Einflüssen beziehungsweise eine Veränderung der Oberflächeneigenschaften dieses Grundkörpers aufgrund von äußeren Einflüssen vermindert oder zumindest reduziert.

Figur 6B ist eine seitliche Querschnittsansicht auf ein Vielschichtbauelement gemäß einer der vorhergehenden Figuren, wobei in diesem Falle der Querschnitt weiter nach außen verlegt ist, sodass die Außenkontakte 6, die an den Längsseiten des Vielschichtbauelements angeordnet sind, sichtbar werden. Es wird gezeigt, wie die Außenkontakte 6 sich über die Höhe des Grundkörpers erstrecken und oberseitig sowie unterseitig die Höhe des Grundkörpers 1 um ein kleines Stück überstehen, wobei sie in diesem Bereich nach innen gerichtete Ansätze beziehungsweise Vorsprünge aufweisen, die je teilweise auf der Oberfläche der Stirnseiten des Vielschichtbauelements angeordnet sind, wodurch eine klammerartige Form eines jeden Außenkontakts gebildet wird.

Eine Funktionskeramik eines Vielschichtbauelements der beschriebenen Art könnte unterschiedliche Materialien je nach beabsichtigter Anwendung des Vielschichtbauelements enthalten. Beispielsweise wird der Einsatz von Kondensatormaterialien, die zu den Klassen COG, X7R, Z5U, Y5V, KQM im Falle der Verwendung des Vielschichtbauelements als EMI (electromagnetic impulse) Filter bevorzugt. Wird das Vielschichtbauelement als Varistor verwendet, umfasst die Funktionskeramik vorzugsweise ZnO-B, ZnO-Pr bzw. eine Mischung hiervon. Dabei ist es besonders günstig, wenn das Vielschichtbauelement als ESD (electrostatic discharge) oder auch als EMI-Filter verwendet wird.

Eine jede beschriebene Elektrodenschicht kann eine der folgenden Materialien oder eine Kombination bzw. Legierung der folgenden Materialien enthalten: Silber, Palladium, Platin, Silber-Palladium-Legierungen, Silber-Platin-Legierungen, Kupfer, Nickel. Dabei ist es günstig, wenn Außenkontakte des Vielschichtbauelements ein Material aufweisen, das für eine mit dem Außenkontakt kontaktierte Elektrodenschicht eingesetzt wird, enthalten.

### Bezugszeichenliste

- 1: Grundkörper
- 2: dielektrische Schicht
- 3: Elektrodenschicht
- 4: Widerstand
- 4a: Widerstandspad
- 5a: erste Entkopplungsschicht
- 5b: zweite Entkopplungsschicht
- 6: Außenkontakt
- 7a: erste Passivierungsschicht
- 7b: zweite Passivierungsschicht
- 8: elektromagnetische Abschirmstruktur
- 9: Masseelektrode

## Patentansprüche

1. Elektrisches Vielschichtbauelement, aufweisend:
- zumindest einen Grundkörper (1), der einen Stapel von übereinander angeordneten dielektrischen Schichten (2) und Elektrodenschichten (3) umfasst, sowie
- zumindest einen Widerstand (4), **dadurch gekennzeichnet, dass**
- jeweils eine Entkopplungsschicht (5a, 5b) an der Oberseite und der Unterseite des Grundkörpers vorhanden ist, wobei zumindest eine Entkopplungsschicht (5a, 5b) den Widerstand (4) von zumindest einem Teil des Vielschichtbauelements chemisch isoliert.

2. Elektrisches Vielschichtbauelement nach Anspruch 1, bei dem die Entkopplungsschicht (5a, 5b) eine streukapazitätsreduzierende Funktion aufweist.

3. Elektrisches Vielschichtbauelement nach einem der vorhergehenden Ansprüche, wobei der Widerstand (4) zumindest teilweise auf zumindest einer Außenfläche des Grundkörpers (1) aufgebracht ist.

4. Elektrisches Vielschichtbauelement nach Anspruch 3, bei dem der Widerstand (4) zumindest teilweise mit einer ersten Passivierungsschicht (7a) abgedeckt ist.

5. Elektrisches Vielschichtbauelement nach einem der vorhergehenden Ansprüche, bei dem zumindest ein Teil der Außenfläche des Grundkörpers (1) mit einer zweiten Passivierungsschicht (7b) abgedeckt ist.

6. Elektrisches Vielschichtbauelement nach einem der vorhergehenden Ansprüche, bei dem eine elektrisch unkontaktierte elektromagnetische Abschirmstruktur (8) im Vielschichtbauelement (1) integriert ist, die den Widerstand (4) von zumindest einem Teil des Vielschichtbauelements (1) elektromagnetisch entkoppelt.

7. Elektrisches Vielschichtbauelement nach Anspruch 6, bei dem die elektromagnetische Abschirmstruktur (8) in der Entkopplungsschicht (5a, 5b) integriert ist.

8. Elektrisches Vielschichtbauelement nach einem der Ansprüche 6 oder 7, bei dem die Abschirmstruktur (8) eine elektrisch leitende Schicht ist.

9. Elektrisches Vielschichtbauelement nach einem der vorhergehenden Ansprüche, bei dem eine Masseelektrode (9) im Grundkörper (1) angeordnet ist.

10. Elektrisches Vielschichtbauelement nach einem der vorhergehenden Ansprüche, bei dem der Teil des Grundkörpers (1), von dem der Widerstand (4) mittels der Entkopplungsschicht (5a, 5b) isoliert ist, einen Varistorkörper umfasst.

11. Elektrisches Vielschichtbauelement nach einem der vorhergehenden Ansprüche, bei dem der Teil des Grundkörpers (1), von dem der Widerstand (4) mittels der Entkopplungsschicht (5a, 5b) chemisch isoliert ist, einen Kondensatorkörper umfasst.

12. Elektrisches Vielschichtbauelement nach einem der vorhergehenden Ansprüche, wobei der Grundkörper (1) einen Vielschichtkondensator und einen Vielschichtvaristor umfasst, die mittels der Entkopplungsschicht (5a, 5b) voneinander entkoppelt sind.

13. Elektrisches Vielschichtbauelement nach einem der vorhergehenden Ansprüche, bei dem die Anordnung von dielektrischen Schichten (2) und Elektrodenschichten (3) bezogen auf eine parallel zu den dielektrischen Schichten verlaufende Ebene symmetrisch ist.

14. Elektrisches Vielschichtbauelement nach einem der vorhergehenden Ansprüche, bei dem die Anordnung von dielektrischen Schichten (2) und Elektrodenschichten (3) bezogen auf eine in Stapelrichtung verlaufende Ebene symmetrisch ist.

15. Elektrisches Vielschichtbauelement nach einem der vorhergehenden Ansprüche, das als Array ausgeführt ist, wobei der Grundkörper (1) mehrere lateral nebeneinander angeordnete Stapel von übereinander angeordneten dielektrischen Schichten (2) und Elektrodenschichten (3) umfasst.

## Claims

1. Multilayer electrical component, comprising:
- at least one main body (1), which comprises a stack of dielectric layers (2) and electrode layers (3) arranged one above the other, and
- at least one resistor (4), **characterized in that**
- on the upper side and the underside of the main body there is in each case a decoupling layer (5a, 5b), at least one decoupling layer (5a, 5b) chemically isolating the resistor (4) from at least part of the multilayer component.

2. Multilayer electrical component according to Claim 1, in which the decoupling layer (5a, 5b) has a stray capacitance reducing function.

3. Multilayer electrical component according to one of the preceding claims, wherein the resistor (4) is at least partially provided on at least one outer surface of the main body (1).

4. Multilayer electrical component according to Claim 3, in which the resistor (4) is at least partially covered by a first passivation layer (7a).

5. Multilayer electrical component according to one of the preceding claims, in which at least part of the outer surface of the main body (1) is covered by a second passivation layer (7b).

6. Multilayer electrical component according to one of the preceding claims, in which an electrically uncontacted electromagnetic shielding structure (8) that electromagnetically decouples the resistor (4) from at least part of the multilayer component (1) is integrated in the multilayer component (1).

7. Multilayer electrical component according to Claim 6, in which the electromagnetic shielding structure (8) is integrated in the decoupling layer (5a, 5b).

8. Multilayer electrical component according to either of Claims 6 and 7, in which the shielding structure (8) is an electrically conducting layer.

9. Multilayer electrical component according to one of the preceding claims, in which an earth electrode (9) is arranged in the main body (1).

10. Multilayer electrical component according to one of the preceding claims, in which the part of the main body (1) from which the resistor (4) is isolated by means of the decoupling layer (5a, 5b) comprises a varistor body.

11. Multilayer electrical component according to one of the preceding claims, in which the part of the main body (1) from which the resistor (4) is isolated by means of the decoupling layer (5a, 5b) comprises a capacitor body.

12. Multilayer electrical component according to one of the preceding claims, wherein the main body (1) comprises a multilayer capacitor and a multilayer varistor that are decoupled from one another by means of the decoupling layer (5a, 5b).

13. Multilayer electrical component according to one of the preceding claims, in which the arrangement of dielectric layers (2) and electrode layers (3) is symmetrical with respect to a plane running parallel to the dielectric layers.

14. Multilayer electrical component according to one of the preceding claims, in which the arrangement of dielectric layers (2) and electrode layers (3) is symmetrical with respect to a plane running in the direction of the stack.

15. Multilayer electrical component according to one of the preceding claims, which is designed as an array, wherein the main body (1) comprises a plurality of stacks arranged laterally alongside one another of dielectric layers (2) and electrode layers (3) arranged one above the other.

## Revendications

1. Élément de structure électrique et à couches multiples, présentant :
- tout au moins un corps de base (1), lequel comprend un empilement de couches diélectriques (2) et de couches d'électrodes (3) qui sont disposées les unes au-dessus des autres, ainsi que
- tout au moins une résistance (4) ;
**caractérisé en ce que**
- une couche de découplage (5a, 5b) est présente respectivement au niveau de la face supérieure et de la face inférieure du corps de base ;
dans lequel tout au moins une couche de découplage (5a, 5b) isole chimiquement la résistance (4) de tout au moins une partie de l'élément de structure à couches multiples.

2. Élément de structure électrique et à couches multiples selon la revendication 1, pour lequel la couche de découplage (5a, 5b) présente une fonction de réduction de la capacité parasite.

3. Élément de structure électrique et à couches multiples selon l'une des revendications précédentes, dans lequel la résistance (4) est mise en place, tout au moins en partie, sur tout au moins une surface externe du corps de base (1).

4. Élément de structure électrique et à couches multiples selon la revendication 3, pour lequel la résistance (4) est recouverte, tout au moins en partie, d'une première couche de passivation (7a).

5. Élément de structure électrique et à couches multiples selon l'une des revendications précédentes, pour lequel tout au moins une partie de la surface externe du corps de base (1) est recouverte d'une deuxième couche de passivation (7b).

6. Élément de structure électrique et à couches multiples selon l'une des revendications précédentes, pour lequel une structure de blindage (8) électromagnétique, qui n'est pas mise en contact électrique, est intégrée dans l'élément de structure à couches multiples (1), laquelle structure de blindage assure le découplage électromagnétique de la résistance (4) de tout au moins une partie de l'élément de structure à couches multiples (1) .

7. Élément de structure électrique et à couches multiples selon la revendication 6, pour lequel la structure de blindage (8) électromagnétique est intégrée dans la couche de découplage (5a, 5b).

8. Élément de structure électrique et à couches multiples selon l'une des revendications 6 ou 7, pour lequel la structure de blindage (8) est une couche électroconductrice.

9. Élément de structure électrique et à couches multiples selon l'une des revendications précédentes, pour lequel une électrode de masse (9) est disposée dans le corps de base (1).

10. Élément de structure électrique et à couches multiples selon l'une des revendications précédentes, pour lequel la partie du corps de base (1), de laquelle la résistance (4) est isolée au moyen de la couche de découplage (5a, 5b), comprend un corps de varistance.

11. Élément de structure électrique et à couches multiples selon l'une des revendications précédentes, pour lequel la partie du corps de base (1), de laquelle la résistance (4) est isolée chimiquement au moyen de la couche de découplage (5a, 5b), comprend un corps de condensateur.

12. Élément de structure électrique et à couches multiples selon l'une des revendications précédentes, dans lequel le corps de base (1) comprend un condensateur à couches multiples et une varistance à couches multiples, lesquels sont découplés l'un de l'autre au moyen de la couche de découplage (5a, 5b).

13. Élément de structure électrique et à couches multiples selon l'une des revendications précédentes, pour lequel la disposition des couches diélectriques (2) et des couches d'électrodes (3) est symétrique par rapport à un plan qui s'étend à la parallèle des couches diélectriques.

14. Élément de structure électrique et à couches multiples selon l'une des revendications précédentes, pour lequel la disposition des couches diélectriques (2) et des couches d'électrodes (3) est symétrique par rapport à un plan qui s'étend dans le sens de l'empilement.

15. Élément de structure électrique et à couches multiples selon l'une des revendications précédentes, lequel se présente sous la forme d'un réseau, dans lequel le corps de base (1) comprend plusieurs empilements de couches diélectriques (2) et de couches d'électrodes (3) qui sont disposées les unes au-dessus des autres, et lesquels empilements sont disposés latéralement les uns à côté des autres.
